# DEMANDE DE BREVET EUROPEEN

(11) **EP 0 637 746 A1**
(43) Date de publication de la demande: **08.02.1995**
(21) Numéro de dépôt: 94420220.9
(22) Date de dépôt: 27.07.1994
(51) Int. Cl.: G01N 27/90, B21B 21/00, B21C 51/00

(54) **Procédé permettant de réduire le bruit de fond au cours du contrôle de tubes métalliques par courants de foucault et tubes réalisés par ce procédé**

(30) Priorité: 02.08.1993 FR 9309694
(71) Demandeur: VALINOX NUCLEAIRE, F-75017 Paris (FR)
(72) Inventeur: Buret, Jean-Louis, F-21500 Montbard (FR); Vuillaume, Denis, F-21500 Montbard (FR)
(74) Mandataire: Desolneux, Jean-Paul Charles

(57) **Abrégé**

Le procédé concerne l'aptitude à la détectabilité de défauts par courants de Foucault sur des tubes métalliques laminés à froid au moyen d'un laminoir à pas de pélerin et concerne plus particulièrement la possibilité de diminuer le bruit de fond et d'accroître le rapport entre un signal étalon et ce bruit de fond.

Le procédé consiste à effectuer après une réduction de section d'au moins 30 % au laminoir à froid à pas de pélerin, une passe d'étirage à creux avec réduction du diamètre extérieur d'environ 0,1 à 5 %. On peut multiplier ainsi le rapport signal/bruit de fond par un facteur compris entre 2 et 3,7 dans le cas d'une série de tubes en alliage INCO 690, comme le montre la figure unique.

L'invention concerne aussi les tubes réalisés par le procédé.

Application à la réalisation de tubes générateurs de vapeur pour centrales nucléaires.

## Description

Le procédé qui fait l'objet de l'invention concerne la détection de défauts par courants de Foucault sur des tubes métalliques laminés à froid par laminoir à pas de pélerin.

On connaît un procédé de détection par courants de Foucault qui s'applique en particulier au contrôle de tubes de petit diamètre. De tels tubes sont utilisés plus spécialement dans les échangeurs de chaleur pour la production de vapeur au moyen d'eau pressurisée parcourant ces tubes en circuit fermé à partir d'un réacteur nucléaire. Ces tubes sont, le plus souvent, réalisés au moyen de certains aciers inoxydables tels qu'un acier type 316 (norme ASTM A312) ou INCO 600 et 690 ou encore d'autres alliages à teneur élevée en Ni tels que les INCOLOY 800 et INCOLOY 825 (norme ASTM B163), INCO et INCOLOY étant des marques de HUNTINGTON ALLOYS.

Le procédé de détection de défauts par courants de Foucault est utilisé de façon systématique pour contrôler à 100 % les défauts que peuvent présenter ces tubes soit au moment de leur fourniture, soit ultérieurement par des contrôles effectués directement sur les tubes montés sur les échangeurs, à l'occasion d'arrêts le plus souvent programmés, pour vérification de la tenue en service.

Les conditions d'exécution de tels contrôles par courants de Foucault font l'objet de règles, proposées par exemple par l'ASME et appliquées, le plus souvent, par accord entre les producteurs et les utilisateurs, pour assurer une détection aussi efficace que possible des défauts présentés par les tubes. Ces contrôles peuvent être exécutés soit avec des sondes externes soit avec des sondes internes.

On utilise des défauts étalon, constitués en général par des trous de faible diamètre percés radialement à travers la paroi de ces tubes sur toute l'épaisseur ou sur une fraction de celle-ci.

La détection se fait, pour les contrôles par courants de Foucault du type inspection en service les tubes étant montés dans les échangeurs, à partir de l'intérieur du tube au moyen d'une sonde interne, de diamètre légèrement inférieur au diamètre de ce tube, qu'on déplace à une vitesse relative de, par exemple, 0,30 m/s.

La sonde est en général constituée de 2 bobinages montés dans un pont de Wheastone et utilisée en mode différentiel. La sonde est alimentée en courant de haute fréquence dans une plage typique de 100 à 700 KHz.

A titre d'exemple les tubes échangeurs, utilisés pour la production de vapeur à partir d'eau pressurisée, ont, le plus souvent, un diamètre extérieur d'environ 0,75 à 1,00 inch (19,05 à 25,4 mm) et une épaisseur de paroi d'environ 0,026 à 0,043 inch, c'est-à-dire environ 0,66 à 1,1 mm.

On constate que l'importante réduction de section, en général supérieure à 50 % et pouvant dépasser 70 %, effectuée à froid en une passe, au moyen d'un laminoir à pas de pélerin, entraîne un écrouissage très important qui présente l'avantage d'éviter un grossissement excessif du grain de l'alliage, au cours du recuit de mise en solution solide, effectué le plus souvent pour limiter les risques de corrosion sous tension.

On constate également que le laminage à froid ainsi réalisé est la cause d'un bruit de fond relativement important qui apparaît aux bornes du moyen de réception de la sonde à courants de Foucault. Le bruit de fond réduit le rapport signal/bruit de fond et tend donc à masquer les défauts de faible amplitude.

Il est possible d'abaisser le bruit de fond en modifiant les conditions de laminage mais il faut, le plus souvent, réduire la vitesse de laminage et donc la productivité ; malgré cela, la diminution du bruit de fond est souvent insuffisante pour atteindre le rapport signal/bruit de fond qui est exigé pour un défaut étalon de dimensions imposées.

On a recherché la possibilité de diminuer, de façon importante, le bruit de fond, observé au cours du contrôle par courants de Foucault en sonde interne ou externe de tubes travaillés à froid au moyen d'un laminoir à pas de pélerin.

On a cherché aussi à ne pas avoir à réduire la vitesse de laminage et aussi, à ne pas avoir à réduire le taux de réduction et donc l'écrouissage, avant le recuit final de mise en solution.

On a recherché enfin la possibilité de mettre au point un procédé de réduction de section avant recuit final, applicable de façon générale à la réalisation de tous types de tubes métalliques de faible diamètre et de grande longueur permettant le contrôle de défauts par courants de Foucault en sonde externe ou interne avec un rapport élevé signal/bruit de fond.

Le procédé qui fait l'objet de l'invention permet d'atteindre l'ensemble des résultats recherchés.

Le procédé permet de conserver tous les avantages du laminage à froid au moyen d'un laminoir à pas de pélerin, tout en permettant de diminuer considérablement le bruit de fond et d'accroître de façon très importante le rapport signal/bruit de fond.

Selon le procédé, on effectue de la façon habituelle, avant le traitement thermique final comprenant un recuit du tube métallique dont on se propose de contrôler les défauts au moyen des courants de Foucault, un dernier laminage à froid au laminoir à pas de pélerin avec un taux de réduction de section au moins égal à 30 %.

On effectue ensuite sur le tube ainsi écroui, une passe d'étirage à creux, à froid également, permettant d'atteindre le diamètre extérieur final visé.

Cette réduction du diamètre extérieur est d'au moins 0,1 % et pas supérieure à 5 % et avantageusement comprise entre 0,2 % et 3 % et plus spécifiquement entre 0,2 % et 0,5 %.

On constate que cette réduction du diamètre extérieur ne s'accompagne pas d'une variation très sensible de l'épaisseur.

La réduction de diamètre est accompagnée d'un allongement proportionnel à la diminution de section du tube. Etant donné que le tube a été très fortement écroui par laminage, on limite, de préférence, la réduction de diamètre du tube à environ 0,2 à 0,5%.

Pour atteindre le diamètre visé, il est nécessaire de choisir une filière de diamètre sensiblement plus faible à cause de la limite élastique élevée du métal fortement écroui.

En effectuant des contrôles systématiques par courants de Foucault du tube ainsi transformé, d'une part à l'état écroui par passage au laminoir à pas de pélerin avant étirage à creux et d'autre part, après étirage à creux et avant traitement thermique, on constate, de façon tout à fait inattendue, une diminution considérable du bruit de fond après la faible passe d'étirage à creux, particulièrement lors d'utilisation de sonde interne.

Cette diminution est d'autant plus importante que le bruit de fond initial est plus élevé.

Il en résulte que, même dans le cas où le tube qui vient juste de subir une réduction de section d'au moins 50 % et, de préférence au moins 70 % au laminoir à pas de pélerin, présente un bruit de fond relativement élevé, il est, en général, possible de diminuer suffisamment le bruit de fond, grâce à la faible passe d'étirage à creux, et d'obtenir un rapport entre le signal étalon choisi et le bruit de fond supérieur à la limite considérée comme acceptable pour ce rapport.

La passe d'étirage à creux permet non seulement d'abaisser le niveau moyen du bruit de fond du tube mais aussi de diminuer la dispersion de ce niveau de bruit de fond.

Dans la pratique, on étalonne la sonde à courants de Foucault de façon qu'elle fournisse un signal d'une hauteur déterminée pour un défaut étalon qui est, par exemple, un trou radial de diamètre défini, percé de part en part à travers la paroi du tube.

C'est à partir de ce signal étalon qu'on mesure le bruit de fond et le rapport signal sur bruit de fond. Le rapport signal/bruit de fond n'a pas une valeur absolue car il dépend de la section du tube, de la nature de l'alliage et des caractéristiques dimensionnelles du défaut étalon. Il n'est donc pas possible de préciser de façon générale le facteur d'accroissement de ce rapport à la suite de la passe d'étirage à creux. Cependant on observe une augmentation progressive de ce facteur d'accroissement en fonction du bruit de fond initial.

Le procédé suivant l'invention est donc un véritable moyen de diminuer le bruit de fond et donc d'accroitre le rapport signal/bruit de fond, d'autant plus efficace que le bruit de fond est initialement plus élevé.

On peut donc considérer les tubes réalisés par le procédé suivant l'invention comme des tubes de sécurité à cause de leur aptitude particulière à la détection de faibles défauts par courants de Foucault.

L'invention concerne également des tubes de sécurité à caractéristiques contrôlées par courants de Foucault, pour applications particulières, en acier inoxydable austénitique ou en métaux ou alliages de relativement faible diamètre dont la dernière réduction de section avant traitement thermique final comporte une réduction d'au moins 30 % au laminoir à pas de pèlerin à froid suivi d'une passe d'étirage à creux avec réduction de diamètre de 0,1 % à 5 %.
Avantageusement cette réduction de diamètre est comprise entre 0,2 % et 3 % et plus spécifiquement entre 0,2 % et 0,5 %.

Les tubes sont, à titre d'exemple, en un acier inoxydable ou en un alliage contenant au moins 40 % en masse au total d'au moins un élément du groupe comprenant Ni, Mo et Cr.

Il est possible d'effectuer la passe d'étirage à creux en remplaçant la filière d'étirage classique par au moins une filière à galets. On peut disposer plusieurs de ces filières à galets en série l'une derrière l'autre avec des calages angulaires différents autour de l'axe d'étirage afin de conférer au tube une surface parfaitement de révolution. Le taux de réduction du diamètre est du même ordre de grandeur que dans le cas d'une filière classique.

D'autres modes de mise en oeuvre du procédé suivant l'invention et de réalisation du produit suivant l'invention peuvent être mis en oeuvre qui ne sortent pas du domaine de l'invention.

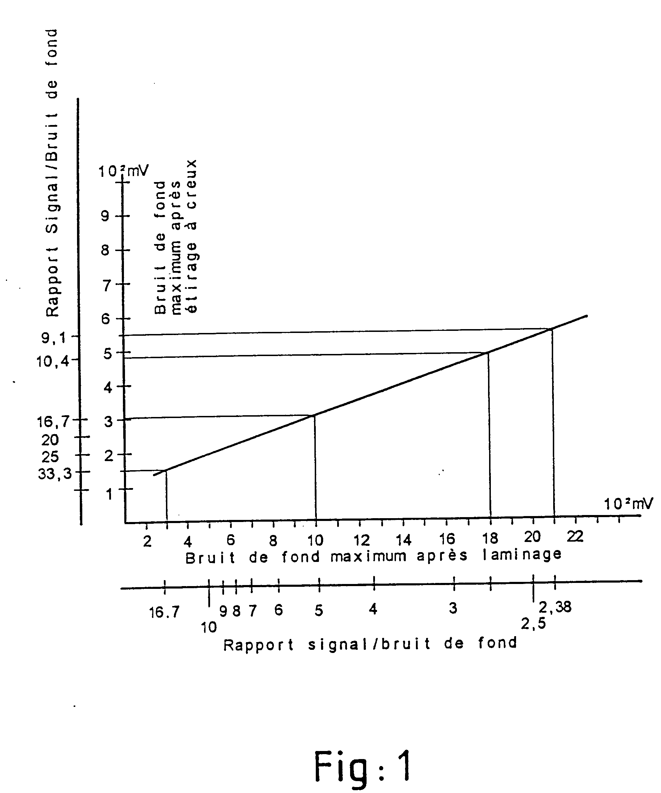

L'exemple et la figure unique ci-après décrivent de façon non limitative un mode particulier de mise en oeuvre du procédé suivant l'invention et de réalisation du produit suivant l'invention.

Figure unique : la figure unique est un diagramme qui représente une droite de corrélation entre le bruit de fond maximum mesuré par courants de Foucault à sonde interne de tubes en sortie de laminoir à pas de pélerin et celui de ces mêmes tubes après une passe d'étirage à creux.

Le bruit de fond maximum d'un tube est défini par son bruit de fond moyen sur une longueur d'environ 500 mm dans la zone du tube présentant le bruit de fond le plus élevé.

### Exemple :

On réalise de façon connue par extrusion à chaud un lot d'ébauches creuses en un alliage INCO 690 contenant en pourcentage en masse : Ni ≧ 58,0 ; Fe 7,0 à 11,0 ; Cr 27,0 à 31,0.

On réduit ensuite ces ébauches à froid, au laminoir à pas de pélerin, jusqu'à un diamètre extérieur de 37,5 mm et une épaisseur de 2,5 mm.

Après recuit, ces ébauches intermédiaires sont laminées au laminoir à pas de pélerin à froid avec un taux de réduction de section de 77,3 % jusqu'à un diamètre extérieur de 19,14 mm et une épaisseur de 1,10 mm.

On mesure, avec une sonde interne à courants de Foucault, le bruit de fond maximum pour chaque tube ainsi réalisé et le rapport entre l'amplitude du signal correspondant à un défaut étalon et ce bruit de fond maximum. On utilise comme défaut étalon un trou unique, radial, de 1,32 mm de diamètre traversant la paroi d'un tronçon de tube. Le courant d'excitation de la sonde a une fréquence de 550 KHz et on ajuste la tension d'excitation pour obtenir une tension de réponse de 5 V au passage de la sonde au niveau du défaut. On constate que le bruit de fond maximum sur le lot de tubes ainsi réduits au laminoir à pas de pélerin est de 920 mV en moyenne soit un rapport moyen, pour l'ensemble du lot, signal/bruit de fond de 5,4.

On effectue ensuite, suivant l'invention, une réduction à froid du diamètre extérieur par étirage à creux des mêmes tubes à travers une filière de diamètre convenable, en une seule passe qui permet d'obtenir un diamètre final de 19,07 mm. On constate que cette réduction de diamètre de 0,07 mm soit 0,39 % du diamètre initial ne s'accompagne pas d'une variation sensible d'épaisseur et donc seulement d'un allongement correspondant. La réduction totale de section depuis le diamètre initial de 37,5 mm est alors de 77,7 %. On mesure à nouveau par sonde à courants de Foucault, dans les mêmes conditions, le bruit de fond maximum et le rapport signal/bruit de fond maximum. On constate que le bruit de fond maximum est abaissé à environ 290 mV en moyenne, le rapport signal/bruit de fond étant élevé à environ 17,2.

On voit donc que, en moyenne, le rapport signal/bruit de fond maximum est multiplié par plus de 3 grâce au Procédé suivant l'invention.

La figure unique montre la corrélation qui existe entre les valeurs moyennes du bruit de fond maximum et du rapport signal/bruit de fond maximum mesurées pour chacun des tubes du lot étudié. Les valeurs portées en abscisse concernent les tubes à l'état laminé à froid au laminoir à pas de pélerin et les valeurs portées en ordonnées concernent les mêmes tubes après avoir subi une passe d'étirage à creux, à froid également, jusqu'au diamètre final de 19,07 mm.

On voit que, d'une façon générale la passe d'étirage à creux non seulement diminue le bruit de fond maximum et accroit le rapport signal/bruit de fond maximum, mais aussi réduit la dispersion des résultats.

Ainsi, un niveau de bruit de fond maximum de 300 mV est ramené à 150 mV, c'est-à-dire divisé par 2 tandis qu'à l'autre bout de l'échelle un niveau de bruit de fond maximum d'environ 1800 mV est ramené à environ 480 mV, c'est-à-dire divisé par 3,75.

En comparant les rapports signal/bruit de fond maximum, on voit qu'un rapport initial de 16,7 pour un bruit de fond maximum de 300 mV est multiplié par 2 et atteint donc 33,3, tandis qu'un rapport de 2,8 correspondant au bruit de fond maximum de 1800 mV est porté à 10,4 c'est-à-dire multiplié par 3,7.

Il en résulte que la faible passe d'étirage à creux permet, dans la plupart des cas, de donner aux tubes obtenus au moyen d'un laminoir à pas de pélerin les caractéristiques souhaitées d'aptitude au contrôle par courants de Foucault.

Bien que les essais décrits dans cet exemple soient effectués sur un alliage à base de nickel, le procédé s'applique aussi à des aciers inoxydables, ou aux matériaux cités dans la présente description.

Il est à remarquer que la passe d'étirage à creux requise par le procédé de l'invention, compte tenu du faible taux de déformation nécessaire pour réaliser le procédé, particulièrement dans la gamme de déformation 0,2 % à 0,5 %, a l'avantage de conserver aux tubes les propriétés intéressantes obtenues par la gamme de laminage pélerin à froid tout en améliorant considérablement les conditions de contrôle aux courants de Foucault, en particulier en sonde interne.

De façon générale, la passe d'étirage à creux selon l'invention présente du fait, d'une part, que cette passe est à creux et, d'autre part, de ses caractéristiques spécifiques, un certain nombre d'avantages complémentaires et notamment:
- elle modifie au minimum la gamme de fabrication initiale du tube
- la mise en oeuvre de l'étirage à creux évite l'introduction de lubrifiant perturbant la surface intérieure du tube et nécessitant son élimination ultérieure, opération indispensable et difficile dans tous les procédés faisant intervenir un étirage sur mandrin intérieur (mandrin long ou mandrin court ou boulet).

L'absence de mandrin intérieur ou boulet affranchit totalement des phénomènes de broutage qui sur des petits tubes de grande longueur sont particulièrement difficiles à contrôler en étirage sur mandrin court ou boulet et provoquent localement des variations de dimensions sources de bruit de fond.

Ces avantages font du procédé revendiqué une solution particulièrement efficace, en particulier sur le plan économique pour résoudre les problèmes à la base de l'invention.

## Revendications

**1)** Procédé permettant d'accroître le rapport signal/bruit de fond mesuré par une sonde à courants de Foucault utilisée pour le contrôle de tubes métalliques de faible diamètre ayant subi une réduction à froid d'au moins 30 % au moyen d'un laminoir à froid à pas de pèlerin caractérisé en ce qu'on effectue au moins une passe d'étirage à creux, à froid, sur le tube à l'état écroui de façon à réduire le diamètre extérieur d'au moins 0,1 % et d'au plus 5 %.

**2)** Procédé suivant revendication 1 caractérisé en ce que la sonde utilisée est une sonde interne.

**3)** Procédé suivant revendication 1 caractérisé en ce que la sonde utilisée est une sonde externe.

**4)** Procédé suivant l'une des revendications 1 à 3 caractérisé en ce que la réduction de diamètre extérieur du tube est comprise entre 0,2 % et 3 %.

**5)** Procédé suivant l'une des revendications 1 à 3 caractérisé en ce que la réduction de diamètre extérieur du tube est comprise entre 0,2 % et 0,5 %.

**6)** Procédé suivant l'une des revendications 1 à 5 caractérisé en ce que le taux de réduction au moyen d'un laminoir à pas de pélerin est d'au moins 50 %.

**7)** Procédé suivant l'une des revendications 1 à 6 caractérisé en ce que les tubes métalliques sont en un acier inoxydable austénitique.

**8)** Procédé suivant l'une des revendications 1 à 6 caractérisé en ce que les tubes métalliques sont en un alliage contenant au moins 40 % en masse, au total, d'au moins un élément du groupe comprenant Ni, Cr, Mo.

**9)** Procédé suivant revendication 8 caractérisé en ce que les tubes métalliques sont en un alliage contenant en pourcentage en masse : Ni > 58,0 ; Fe 7,0 à 11,0 ; Cr 27,0 à 31,0.

**10)** Tubes métalliques de sécurité en métaux ou alliages de relativement faible diamètre caractérisés en ce qu'avant traitement thermique final, ils ont subi une réduction de section d'au moins 30 % au moyen d'un laminoir à pas de pélerin à froid suivie d'une passe d'étirage à creux de façon à réduire leur diamètre de au moins 0,1 % et de au plus 5 %.

**11)** Tubes selon la revendication 10 caractérisé en ce que la réduction du diamètre extérieur des tubes est comprise entre 0,2 % et 3 % et avantageusement entre 0,2 % et 0,5 %.

**12)** Application des tubes de sécurité suivant revendication 10 ou 11 à la réalisation d'échangeurs de chaleur.

**13)** Application suivant revendication 12 caractérisée en ce que les échangeurs de chaleur sont chauffés par un circuit d'eau provenant d'un réacteur nucléaire et permettent la production de vapeur.
